# EUROPEAN PATENT SPECIFICATION

(11) **EP 3 121 525 B1**
(45) Date of publication and mention of the grant of the patent: **03.11.2021**
(21) Application number: 16180772.2
(22) Date of filing: 22.07.2016
(51) Int. Cl.: F24F 11/46, F24F 11/62, H02P 27/06, H02M 1/15, H02M 1/42

(54) **POWER CONVERSION APPARATUS AND AIR CONDITIONER INCLUDING THE SAME**
LEISTUNGSUMWANDLUNGSVORRICHTUNG UND KLIMAANLAGE MIT EINER SOLCHEN VORRICHTUNG
APPAREIL DE CONVERSION DE PUISSANCE ET CLIMATISEUR COMPRENANT CELUI-CI

(30) Priority: 23.07.2015 KR 20150104504; 23.07.2015 KR 20150104505
(43) Date of publication of application: 25.01.2017
(73) Proprietor: LG ELECTRONICS INC., Yeongdeungpo-gu Seoul 07336 (KR)
(72) Inventor: KIM, Kyungmin, 08592 Seoul (KR); KIM, Sangyoung, 08592 Seoul (KR); AN, Joonsik, 08592 Seoul (KR); PARK, Taeyoung, 08592 Seoul (KR)
(74) Representative: Vossius & Partner Patentanwälte Rechtsanwälte mbB

(56) References cited:
- EP-A1- 0 697 569
- EP-A1- 2 360 824
- DE-A1- 19 920 973
- None

## Description

### BACKGROUND OF THE INVENTION

### 1. Field of the invention

The present invention relates to a power conversion apparatus and an air conditioner including the same, and more particularly, to a power conversion apparatus capable of increasing converter efficiency and an air conditioner including the same.

### 2. Description of the Related Art

An air conditioner is installed to discharge cool or hot air into a room to adjust an indoor temperature and to purify indoor air, thereby providing a comfortable indoor environment to users. In general, the air conditioner includes an indoor unit installed in a room and an outdoor unit for supplying a refrigerant to the indoor unit. The indoor unit includes an indoor heat exchanger. The outdoor unit includes a compressor and an outdoor heat exchanger.

A current high-capacity air conditioner rectifies an input three-phase voltage using a diode which is a passive element and drives a motor using the rectified voltage via an inverter. In this case, as the capacity of a load connected to the inverter increases, a dc link voltage decreases. In particular, when the motor rotates at a high speed, high-speed operation may be restricted due to lack of the dc link voltage. EP2360824 A1 refers to a power conversion controller for controlling the operation of a switch in a power conversion circuit, wherein the power conversion controller is configured to operate the switch according to a variable frequency mode of operation for switching frequencies greater than a minimum threshold value and a fixed frequency mode of operation at a switching frequency equal to the minimum threshold value. DE19920973 A1 relates to a method which comprises that in a d.c. link circuit after a smoothing inductance a chopper thyristor is connected in parallel with a free wheeling diode.

### SUMMARY OF THE INVENTION

Therefore, the present invention has been made in view of the above problems, and it is an object of the present invention to provide a power conversion apparatus capable of increasing converter efficiency and an air conditioner including the same.

The present invention is defined by the independent claim. Dependent claims refer to preferred embodiments.

In accordance with an aspect of the present invention, the above and other objects can be accomplished by the provision of a power conversion apparatus comprising a converter including a switching element and configured to convert an input alternating current (AC) voltage into a direct current (DC) voltage and to output the DC voltage, and a controller configured to control the converter, wherein the controller divides a half-period of the input AC voltage into a plurality of periods according to a level or phase of the input AC voltage and changes a switching frequency of the switching element in at least some of the plurality of periods.

In accordance with another aspect of the present invention, there is provided a power conversion apparatus including a converter including a switching element and configured to convert an input alternating current (AC) voltage into a direct current (DC) voltage and to output the DC voltage, and a controller configured to control the converter, wherein the controller sets a switching frequency of the switching element in first and second periods at both ends of a half-period of the input AC voltage to be higher than that of the switching element in a third period between the first and second periods of the half-period of the input AC voltage.

In accordance with another aspect of the present invention, there is provided an air conditioner including a converter including a switching element and configured to convert an input alternating current (AC) voltage into a direct current (DC) voltage and to output the DC voltage, and a controller configured to control the converter, wherein the controller divides a half-period of the input AC voltage into a plurality of periods according to a level or phase of the input AC voltage and changes a switching frequency of the switching element in at least some of the plurality of periods.

In accordance with another aspect of the present invention, there is provided an air conditioner including a converter including a switching element and configured to convert an input alternating current (AC) voltage into a direct current (DC) voltage and to output the DC voltage, and a controller configured to control the converter, wherein the controller sets a switching frequency of the switching element in first and second periods at both ends of a half-period of the input AC voltage to be higher than that of the switching element in a third period between the first and second periods of the half-period of the input AC voltage.

### BRIEF DESCRIPTION OF THE DRAWINGS

The above and other objects, features and other advantages of the present invention will be more clearly understood from the following detailed description taken in conjunction with the accompanying drawings, in which:
FIG. 1 is a diagram showing the construction of an air conditioner according to an embodiment of the present invention;
FIG. 2 is a schematic view showing an outdoor unit and an indoor unit of FIG. 1;
FIG. 3 is a block diagram showing a power conversion apparatus for driving a compressor of the outdoor unit of FIG. 1;
FIG. 4 is a circuit diagram showing an example of the power conversion apparatus of FIG. 3;
FIG. 5 is a block diagram showing an example of a converter controller of FIG. 3;
FIGS. 6 to 11B are views referenced to explain operation of the converter controller of FIG. 5;
FIG. 12 is a circuit diagram showing another example of the power conversion apparatus of FIG. 3; and
FIG. 13 is a block diagram showing the internal configuration of an example of an inverter controller of FIG. 3.

### DETAILED DESCRIPTION OF THE PREFERRED EMBODIMENTS

Reference will now be made in detail to the preferred embodiments of the present invention, examples of which are illustrated in the accompanying drawings.

The suffixes "module" and "unit" in elements used in description below are given only in consideration of ease in preparation of the specification and do not have specific meanings or functions. Therefore, the suffixes "module" and "unit" may be used interchangeably.

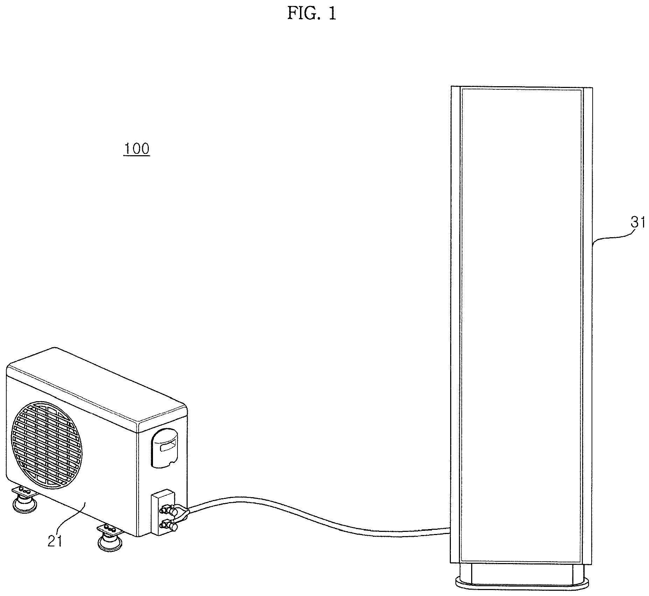

FIG. 1 is a view illustrating the construction of an air conditioner according to an embodiment of the present invention.

As illustrated in FIG. 1, an air conditioner 100 according to an embodiment of the present invention may include an indoor unit 31 and an outdoor unit 21 connected to the indoor unit 31.

The indoor unit 31 of the air conditioner may be any one of stand type, wall mount type, and ceiling type air conditioners. In FIG. 1, the stand type indoor unit 31 is illustrated.

The air conditioner 100 may further include at least one of a ventilator, an air purifier, a humidifier, and a heater, which may be operatively connected to the indoor unit and the outdoor unit.

The outdoor unit 21 includes a compressor (not shown) for compressing a refrigerant, an outdoor heat exchanger (not shown) for performing heat exchange between the refrigerant and outdoor air, an accumulator (not shown) for extracting a gaseous refrigerant component from the refrigerant and supplying the extracted gaseous refrigerant component to the compressor, and a four-way valve (not shown) for changing a flow path of the refrigerant based on a heating operation. In addition, while the outdoor unit 21 may further include a plurality of sensors, a valve, and an oil collector, descriptions thereof will be omitted herein.

The outdoor unit 21 operates compressors and outdoor heat exchangers included therein to compress the refrigerant or perform heat exchange based on setting conditions and to supply the compressed or heat-exchanged refrigerant to the indoor unit 31. The outdoor unit 21 may be driven according to demand of a remote control unit (not shown) or the indoor unit 31. As a cooling/heating capacity of the air conditioner 100 varies based on the indoor unit which is driven, the number of driven outdoor units and the number of driven compressors installed in outdoor units may be changed.

In this case, the outdoor unit 21 supplies the compressed refrigerant to the connected indoor unit 31.

The indoor unit 31 receives the refrigerant from the outdoor unit 21 to discharge cool or hot air into a room. The indoor unit 31 includes an indoor heat exchanger (not shown), an indoor fan (not shown), an expansion valve (not shown) for expanding the refrigerant, and a plurality of sensors (not shown).

The outdoor unit 21 and the indoor unit 31 are connected to each other via communication cables to exchange data with each other. The outdoor unit 21 and the indoor unit 31 are connected to the remote control unit (not shown) by wire or wirelessly to operate according to control of the remote control unit (not shown).

A remote controller (not shown) is connected to the indoor unit 31 to allow a user to input a control command for controlling the indoor unit and to receive and display state information on the indoor unit. In this case, the remote controller may communicate with the indoor unit in a wired or wireless manner according to how the remote controller is connected to the indoor unit 31.

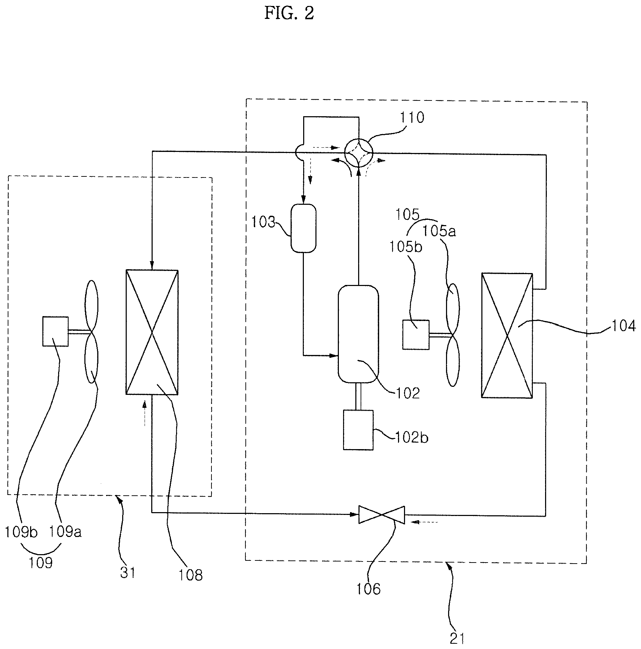

FIG. 2 is a schematic view of the outdoor unit and the indoor unit shown in FIG. 1.

Referring to FIG. 2, the air conditioner 100 is broadly divided into the indoor unit 31 and the outdoor unit 21.

The outdoor unit 21 includes a compressor 102 for compressing a refrigerant, a compressor motor 102b for driving the compressor, an outdoor heat exchanger 104 for dissipating heat from the compressed refrigerant, an outdoor blower 105 including an outdoor fan 105a disposed at one side of the outdoor heat exchanger 104 to accelerate heat dissipation of the refrigerant and a motor 105b for rotating the outdoor fan 105a, an expansion unit 106 for expanding the condensed refrigerant, a cooling/heating switching valve 110 for changing a flow path of the compressed refrigerant, and an accumulator 103 for temporarily storing the gaseous refrigerant to remove moisture and foreign particles from the refrigerant and supplying the refrigerant of predetermined pressure to the compressor.

The indoor unit 31 includes an indoor heat exchanger 108 disposed in a room to perform a cooling/heating function, and an indoor blower 109 including an indoor fan 109a disposed at one side of the indoor heat exchanger 108 to accelerate heat dissipation of the refrigerant and an indoor fan motor 109b for rotating the indoor fan 109a.

At least one indoor heat exchanger 108 may be provided. At least one of an inverter compressor and a constant speed compressor may be used as the compressor 102.

In addition, the air conditioner 100 may be configured as a cooler for cooling the room or may be configured as a heat pump for cooling or heating the room.

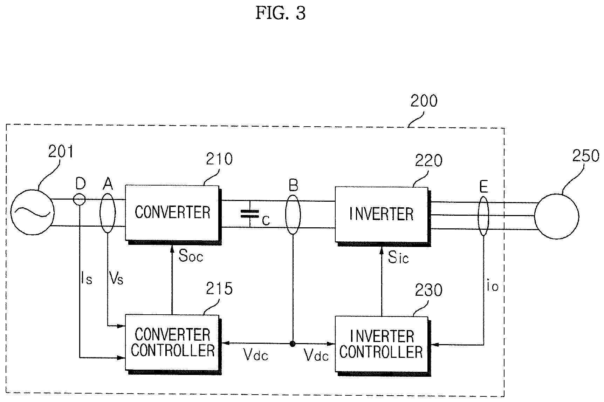

The compressor 102 of the outdoor unit 21 of FIG. 1 may be driven by a power conversion apparatus (200 of FIG. 3) for driving the compressor.

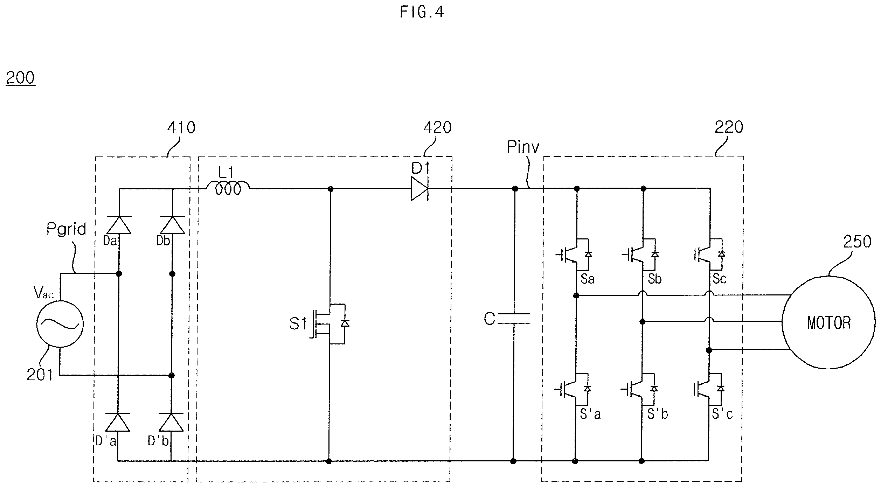

FIG. 3 is a block diagram showing a power conversion apparatus 200 for driving a compressor of the outdoor unit 21 of FIG. 1, and FIG. 4 is a circuit diagram showing an example of the power conversion apparatus 200 of FIG. 3.

Referring to the figures, the power conversion apparatus (200 of FIG. 3) for driving the compressor may include an inverter 220 for outputting three-phase AC current to a compressor motor 250, an inverter controller 230 for controlling the inverter 220, a converter 210 for supplying a dc voltage to the inverter 220, a converter controller 215 for controlling the converter 210, and a dc link capacitor C between the converter 210 and the inverter 220. The power conversion apparatus 200 may further include a dc link voltage detector B, an input voltage detector A, an input current detector D and an output current detector E.

The power conversion apparatus 200 converts AC power received from a power system and supplies the converted power to the compressor motor 250. The power conversion apparatus 200 may be referred to as a compressor drive apparatus.

The power conversion apparatus 200 according to the embodiment of the present invention divides a half-period into a plurality of periods according to the level or phase of the input AC voltage and changes the switching frequency of a switching element of the converter 210 in at least some of the plurality of periods. Accordingly, it is possible to decrease switching loss and conduction loss of the switching element of the converter. As a result, it is possible to increase the converter efficiency.

The converter 210 converts an input AC voltage into a dc voltage. The converter 210 may include a rectifier 410 and a boost converter 420. Input power based on the input AC voltage may be referred to as Pgrid.

The rectifier 410 receives and rectifies a single-phase AC voltage 201 and outputs a rectified voltage.

To this end, the rectifier 410 may include two pairs of upper and lower arm diodes which are connected to each other in parallel (Da&D'a, Db&D'b in shown FIG. 4), each pair including an upper arm diode element and a lower arm diode element which are connected in series. That is, the upper and lower arm diodes may be connected to each other in the form of a bridge.

The boost converter 420 includes an inductor L1 and a diode D1 connected in series between the rectifier 410 and the inverter 220 and a switching element S1 connected between the inductor L1 and the diode D1. The switching element S1 is turned on to store energy in the inductor L1 and then is turned off to output the energy stored in the inductor L1 through the diode D1.

If a low-capacity dc link capacitor C is used, the boost converter 420 may output a voltage obtained by boosting a predetermined voltage, that is, an offset voltage.

The converter controller 215 may control turn-on timing of the switching element S1 of the boost converter 420. Accordingly, a converter switching control signal S_{cc} for controlling the turn-on timing of the switching element S1 may be output.

To this end, the converter controller 215 may receive an input voltage Vₛ, input current Iₛ and a dc link voltage V_{dc} from the input voltage detector A, the input current detector D and the dc link voltage detector B, respectively.

The input voltage detector A may detect the input voltage Vₛ from an input AC power source 201 and may be located at the previous stage of the rectifier 410.

The input voltage detector A may include a resistor element and an operational amplifier (OP AMP) for voltage detection. The detected input voltage Vₛ may be applied to the converter controller 215 in the form of a pulse type discrete signal to generate the converter switching control signal S_{cc}.

On the other hand, the input voltage detector A may also detect a zero crossing point of the input voltage.

The input current detector D may detect input current Iₛ from the input AC power source 201. Specifically, the input current detector D may be disposed at the previous stage of the rectifier 410.

The input current detector D may include a current sensor, a current transformer (CT), and a shunt resistor for current detection. The detected input current Iₛ may be applied to the converter controller 215 in the form of a pulse type discrete signal to generate the converter switching control signal S_{cc}.

The dc voltage detector B detects dc link voltage V_{dc} of the dc link capacitor C. A resistor element, an OP AMP, etc. may be used to detect power. The detected voltage V_{dc} of the dc link capacitor C may be applied to the converter controller 215 and the inverter controller 230 in the form of a pulse type discrete signal. The converter switching control signal S_{cc} and an inverter switching control signal S_{ic} may be generated based on the dc voltage V_{dc} of the dc link capacitor C.

The inverter 220 includes a plurality of inverter switching elements. The inverter 220 may convert the dc voltage V_{dc} smoothed by on/off operations of the switching elements into a three-phase AC voltage having a predetermined frequency and output the three-phase AC voltage to the three-phase motor 250.

Then, the inverter 220 may supply an inverter power Pinv to the motor 250 which is a load. The inverter power Pinv is a power necessary for the motor 250 which is a load. The inverter power may follow a necessary target power. Accordingly, in this specification, the inverter power Pinv may have the same concept as a target power required for the load.

Specifically, the inverter 220 may include a plurality of switching elements. For example, the inverter 220 may include upper arm switching elements (Sa, Sb, and Sc in shown FIG. 4) and lower arm switching elements (S'a, S'b, and S'c in shown FIG. 4), each pair of an upper arm switching element and a lower arm switching element being connected in series and three pairs of upper and lower arm switching elements Sa and S'a, Sb and S'b, and Sc and S'c being connected in parallel. Diodes may be connected in anti-parallel to the respective switching elements Sa, S'a, Sb, S'b, Sc, and S'c.

The inverter controller 230 may output the inverter switching control signal S_{ic} to the inverter 220 so as to control a switching operation of the inverter 220. The inverter switching control signal S_{ic} may be generated and output based on an output current iₒ flowing in the motor 250, and the dc link voltage V_{dc} at both ends of the dc link capacitor, as a pulse width modulation (PWM) switching control signal. The output current iₒ may be detected by the output current detector E and the dc link voltage V_{dc} may be detected by the dc link voltage detector B.

The output current detector E may detect the output current iₒ flowing between the inverter 220 and the motor 250. That is, the output current detector E may detect current flowing in the motor 250. The output current detector E may detect all output currents iₐ, i_{b}, and i_{c} of respective phases. Alternatively, the output current detector E may detect output currents of two phases using three-phase balance.

The output current detector E may be disposed between the inverter 220 and the motor 250. A current transformer (CT), a shunt resistor, etc. may be used for current detection.

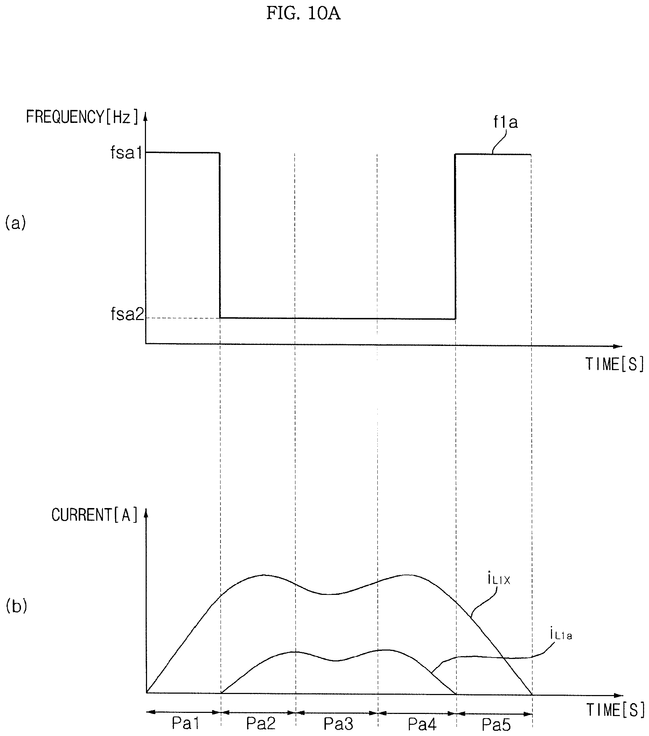

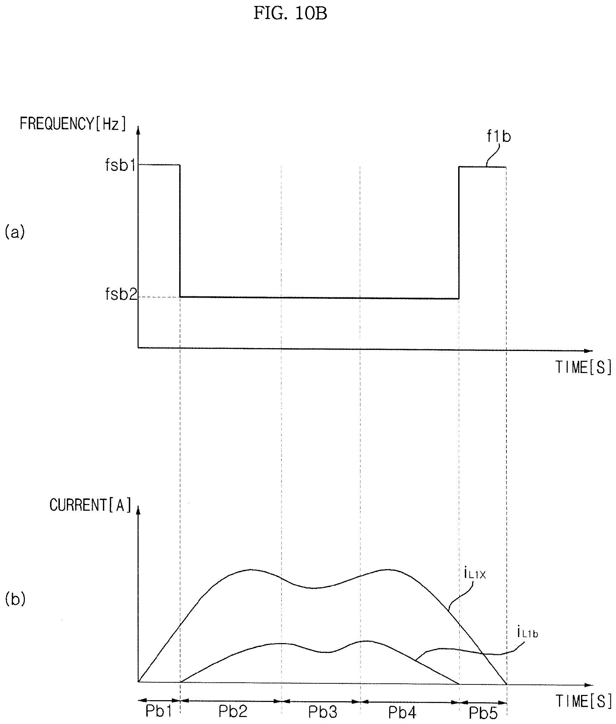

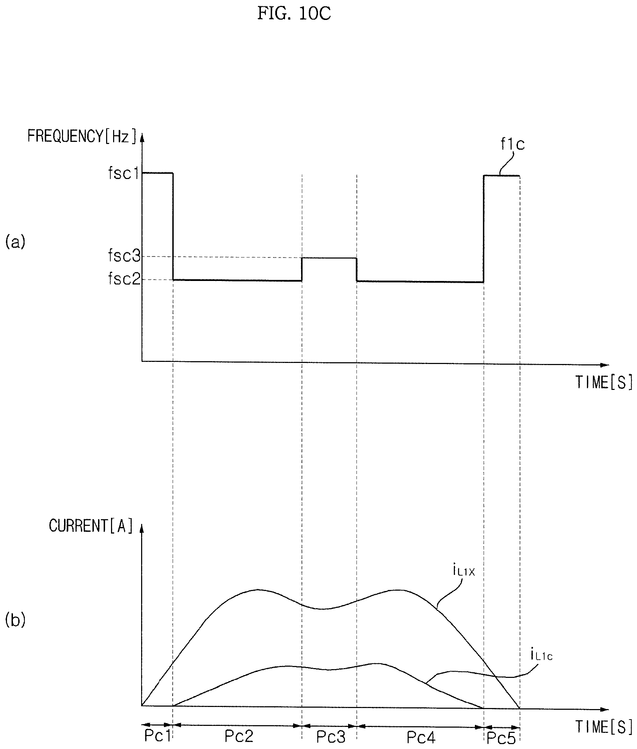

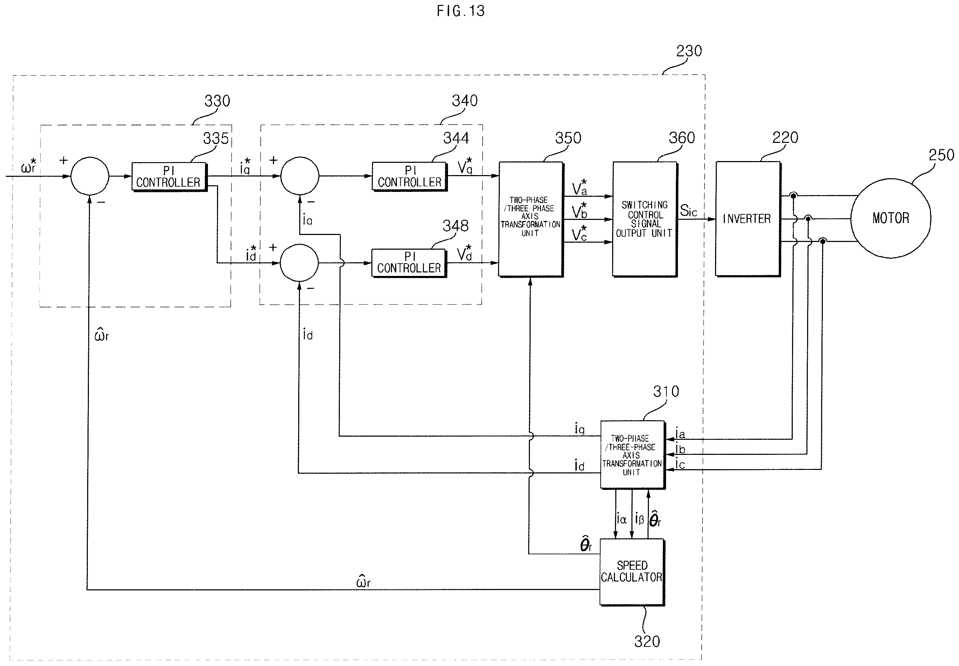

The inverter controller 230 may include a current command generator (330 of FIG. 13), a voltage command generator (340 of FIG. 13) and a switching control signal output unit (360 of FIG. 13), all of which will be described in detail with reference to FIG. 10 and subsequent figures thereof.

The output inverter switching control signal S_{ic} may be converted into a gate drive signal in a gate drive unit (not shown) and input to the gate of each switching element of the inverter 220. Therefore, the switching elements Sa, S'a, Sb, S'b, Sc and S'c of the inverter 220 perform switching operation.

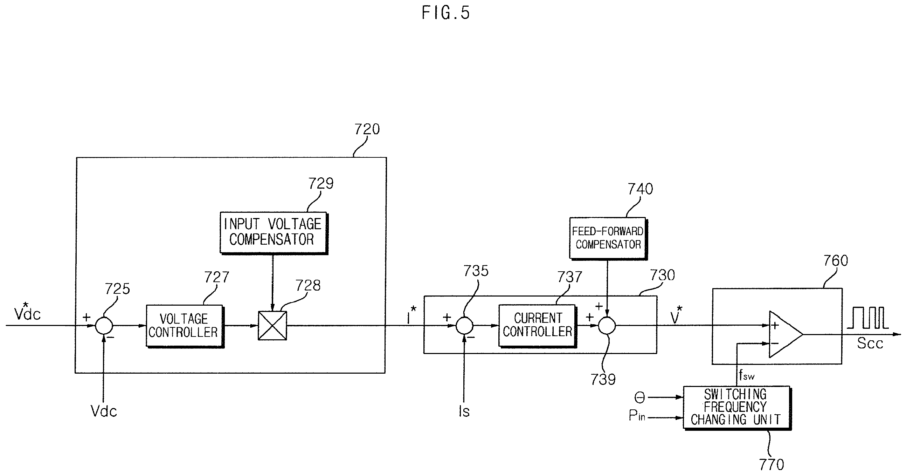

FIG. 5 is a block diagram showing an example of the converter controller of FIG. 3.

Referring to the figure, the converter controller 215 may include a current command generator 720, a current controller 730 and a feed-forward compensator 740.

The current command generator 720 may synchronize the phase and shape of the input voltage and generate a current command value I*. The current command generator 720 may include a calculator 725, a voltage controller 727 and an input voltage compensator 729.

The calculator 725 calculates a difference between a dc link voltage command value V*_{dc} and a dc link voltage V_{dc} detected by the dc link voltage detector B and delivers the difference to the voltage controller 727.

The voltage controller 727 may generate a current command value through PI control based on the difference between the dc link voltage command value V*_{dc} and the dc link voltage V_{dc}.

The input voltage compensator 729 may generate a compensation current command value for compensating for the input voltage in consideration of the phase and shape of the input AC voltage Vₛ. For example, the compensation current command value |sinωt| may be output.

The calculator 728 may generate and output a final current command value I* based on the current command value from the voltage controller 727 and the compensation current command value from the input voltage compensator 729.

For example, the calculator 728 may multiply the current command value from the voltage controller 727 by the compensation current command value |sinωt| and output the multiplied value. Accordingly, a phase component may be applied.

As a result, the current command generator 720 may finally generate and output the current command value I* based on the current command value from the voltage controller 727 and the compensation current command value from the input voltage compensator 729.

Next, the voltage command generator 730 may generate and output a voltage command value V* based on the current command value I* from the current command generator 720 and the input current Iₛ detected in correspondence with the input AC voltage Vₛ.

The voltage command generator 730 may include a calculator 735, a current controller 737 and a calculator 739.

The calculator 735 calculates a difference between the current command value I* and the input current Iₛ detected by the input current detector D and delivers the difference to the current controller 737.

The current controller 737 may generate a voltage command value through PI control, etc. based on the difference between the current command value I* and the input current Iₛ detected by the input current detector D. The generated voltage command value may include a signal corresponding to a duty ratio.

The feed-forward compensator 740 may perform feed-forward compensation in order to reject disturbance including the input voltage Vₛ of the boost converter 420 and the dc link voltage V_{dc}. The feed-forward compensator 740 may generate the compensation voltage command value corresponding to a second duty ratio in consideration of disturbance rejection.

The calculator 739 may add the voltage command value from the current controller 737 and the compensation voltage command value from the feed-forward compensator 740 and output a final voltage command value V*.

For example, the calculator 739 may add the duty ratio of the voltage command value from the current controller 737 and the second duty ratio of the compensation voltage command value from the feed-forward compensator 740 and output the final voltage command value V*.

Next, a switching frequency changing unit 770 may set the switching frequency F_{sw} of the switching element based on the level or phase of the input AC voltage Vₛ.

The switching frequency changing unit 770 may set the switching frequency F_{sw} of the switching element based on the dc voltage and the output power based on the dc voltage.

More specifically, the switching frequency changing unit 770 may set the switching frequency F_{sw} of the switching element based on phase information θ of the input voltage detected by the input voltage detector A and the power P calculated based on the dc link voltage detected by the dc link voltage detector B.

For example, the switching frequency changing unit 770 may divide the half-period of the input AC voltage Vₛ into a plurality of periods based on the level or phase information θ of the input AC voltage Vₛ and change the switching frequency of the switching element in at least some of the plurality of periods.

As another example, the switching frequency changing unit 770 may change the frequency of the switching element in some periods of the half-period of the input AC voltage Vₛ based on a load, that is, the calculated power P.

Various operations for changing the switching frequency of the switching frequency changing unit 770 based on the phase information θ or the calculated power P may be performed as follows.

For example, according to the invention the converter controller 215 and, more particularly, the switching frequency changing unit 770 may divide the half-period into the plurality of periods based on the level or phase of the input AC voltage Vₛ and change the switching frequency of the switching element in at least some of the plurality of periods.

The converter controller 215 and, more particularly, the switching frequency changing unit 770 sets the switching frequency of the switching element in first and second periods at both ends of the half-period of the input AC voltage Vₛ to be higher than the switching frequency in a third period between the first and second periods of the half-period of the input AC voltage Vₛ.

The converter controller 215 and, more particularly, the switching frequency changing unit 770 may change the switching frequency of the switching element in first and second periods at both ends of the half-period of the input AC voltage Vₛ and set the switching frequency in a third period between the first and second periods of the half-period of the input AC voltage Vₛ to be constant. According to the invention, the controller 215 is configured to control the switching element of the converter to be differently driven in first and second periods having a first switching frequency and a third period having a second switching frequency lower than the first switching frequency between the first and second periods.

Moreover, according to the invention, the converter controller 215 and the switching frequency changing unit 770 is configured to control increase in the second switching frequency, to control decrease in widths of the first period and the second period or to control increase in a width of the third period as a load of an output terminal of the converter 210 increases.

The converter controller 215 and, more particularly, the switching frequency changing unit 770 may operate the switching element in a discontinuous conduction mode during the first and second periods at both ends of the half-period of the input AC voltage Vₛ and operate the switching element in a continuous conduction mode during the third period between the first and second periods of the half-period of the input AC voltage Vₛ.

The converter controller 215 and, more particularly, the switching frequency changing unit 770 may decrease the first and second periods of the discontinuous conduction mode as the load of the output terminal of the converter 210 increases.

The converter controller 215 and, more particularly, the switching frequency changing unit 770 may increase the switching frequency of the switching element in the third period as the load of the output terminal of the converter 210 increases and fix the switching frequency of the switching element in the first and second periods.

The converter controller 215 and, more particularly, the switching frequency changing unit 770 may divide the half-period of the voltage of the power source 201 into the plurality of periods and control the switching element S1 of the converter 210 to be differently driven in the first and second periods having a first switching frequency and the third period having a second switching frequency lower than the first switching frequency between the first and second periods.

The converter controller 215 and, more particularly, the switching frequency changing unit 770 may change the second switching frequency of the third period according to the load 205 of the output terminal of the converter. In particular, the converter controller 215 and, more particularly, the switching frequency changing unit 770 increases the second switching frequency as the load 205 of the output terminal of the converter increases.

The converter controller 215 and, more particularly, the switching frequency changing unit 770 decreases the width of the first and second periods as the load 205 of the output terminal of the converter increases.

The converter controller 215 and, more particularly, the switching frequency changing unit 770 increases the width of the third period as the load 205 of the output terminal of the converter increases.

The converter controller 215 and, more particularly, the switching frequency changing unit 770 may further divide the half-period of the voltage of the power source 201 into a fourth period between the first and third periods and a fifth period between the third and second periods and control the switching element of the converter to operate at the second switching frequency in the fourth and fifth periods.

The converter controller 215 and, more particularly, the switching frequency changing unit 770 may further divide the half-period of the voltage of the power source 201 into a fourth period between the first and third periods and a fifth period between the third and second periods and control the switching element of the converter to operate in the fourth and fifth periods with a third switching frequency higher than the second switching frequency and lower than the first switching frequency.

The converter controller 215 and, more particularly, the switching frequency changing unit 770 may further divide the half-period of the voltage of the power source 201 into a fourth period between the first and third periods and a fifth period between the third and second periods and decrease the widths of the first and second periods or increase the widths of the fourth and fifth periods as the load 205 of the output terminal of the converter increases.

The converter controller 215 and, more particularly, the switching frequency changing unit 770 may further divide the half-period of the voltage of the power source 201 into a fourth period between the first and third periods and a fifth period between the third and second periods and increase the switching frequency of the third to fifth periods as the load 205 of the output terminal of the converter increases.

The converter controller 215 and, more particularly, the switching frequency changing unit 770 may control the switching frequency of the third period to be higher than that of the fourth and fifth periods among the third to fifth periods as the load 205 of the output terminal of the converter increases.

The converter controller 215 and, more particularly, the switching frequency changing unit 770 may change the second switching frequency or the widths of the first and second periods according to the level of current flowing in the inductor L1 of the converter 210.

More specifically, the converter controller 215 and, more particularly, the switching frequency changing unit 770 may decrease the switching frequency as the level of current flowing in the inductors L1 and L2 of the converter 210 increases. In particular, the second switching frequency may be controlled to be lower than the first switching frequency.

Next, the switching control signal output unit 760 may output the switching control signal S_{cc} of the converter 210 based on the voltage command value V* and the set switching frequency f_{sw}.

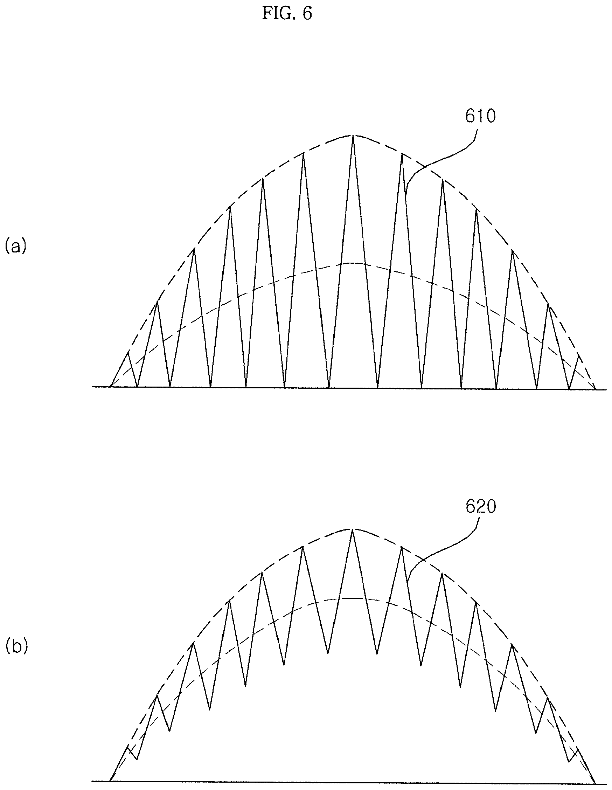

FIGS. 6 to 8 are views referenced to explain operation of the converter controller of FIG. 5.

FIG. 6 is a diagram showing various examples of the switching mode of the converter.

First, (a) of FIG. 6 shows operation of the converter in a critical boundary conduction mode and (b) of FIG. 6 shows operation of the converter in a continuous conduction mode.

If the switching element of the converter is driven during the half-period of the input voltage in the critical boundary conduction mode of (a) of FIG. 6 or the continuous conduction mode of (b) of FIG. 6, switching loss of the switching element occurs.

In particular, upon high-speed switching, switching loss according to the switching operation of the switching element increases.

In addition to the continuous conduction mode of (b) of FIG. 6, when the switching element of the converter operates in the discontinuous conduction mode, switching loss of the switching element is further reduced.

However, the discontinuous conduction mode decreases switching loss but increases conduction loss as compared to the continuous conduction mode.

In the present invention, in order to solve such a problem, the discontinuous conduction mode and the continuous conduction mode are used.

More specifically, the converter controller 215 may operate the switching element in the discontinuous conduction mode having less switching loss during first and second periods at both ends of the half-period of the input AC voltage and operate the switching element in the continuous conduction mode having less conduction loss during the third period between the first and second periods of the half-period of the input AC voltage.

In addition, the converter controller 215 may set the switching frequency during the first and second periods at both ends of the half-period of the input AC voltage to be higher than the switching frequency during the third period between the first and second periods of the half-period of the input AC voltage, because switching loss does not increase even when the switching frequency increases in the discontinuous conduction mode.

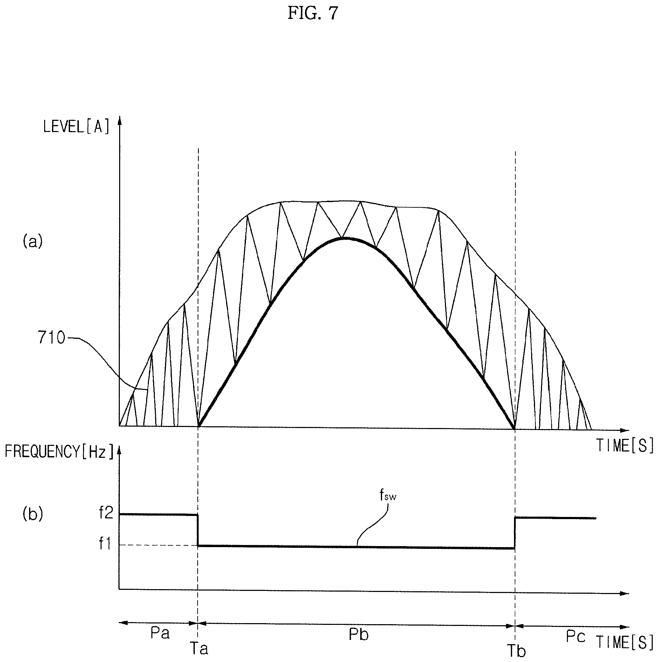

FIG. 7 shows the case in which the switching mode of the converter is a mixture of the discontinuous conduction mode and the continuous conduction mode according to an embodiment of the present invention.

In particular, the switching element operates in the discontinuous conduction mode having less switching loss during the first period Pa and the second period Pc at both ends of the half-period of the input AC voltage and operates in the continuous conduction mode having less conduction loss during the third period Pb between the first and second periods of the half-period of the input AC voltage.

During the first and second periods at both ends of the half-period of the input AC voltage Vₛ, in the discontinuous conduction mode, turn-off loss of the diode and turn-on loss of the switching element are further decreased as compared to the continuous conduction mode, thereby increasing converter operation efficiency.

The waveform 710 of the figure shows current flowing in the inductor L1 of FIG. 4.

In the figure, the switching frequency during the first period Pa and the second period Pc at both ends of the half-period of the input AC voltage is f2 and the switching frequency during the third period Pb between the first and second periods of the half period of the input AC voltage is f1, which is lower than f2.

The half-period of the input AC voltage may be divided into a plurality of periods and the switching frequency of the switching element may be changed in at least some of the plurality of periods, thereby reducing switching loss and conduction loss of the switching element of the converter. As a result, it is possible to increase converter efficiency.

In addition, the switching frequency of the switching element in the first and second periods at both ends of the half-period of the input AC voltage Vₛ may be set to be higher than that of the switching element in the third period between the first and second periods of the half-period of the input AC voltage Vₛ, thereby reducing current ripple in a frequency changing period due to switching frequency increase and reducing conduction loss of the switching element and core loss of the reactor or the inductor. Accordingly, it is possible to increase converter efficiency.

The converter controller 215 may decrease the first and second periods of the discontinuous conduction mode or increase the switching frequency of the switching element in the third period, as the load of the output terminal of the converter 210 increases. At this time, the switching frequency of the switching element in the first and second periods may be fixed. The increased switching frequency of the switching element in the third period may be lower than that of the switching element in the first and second periods.

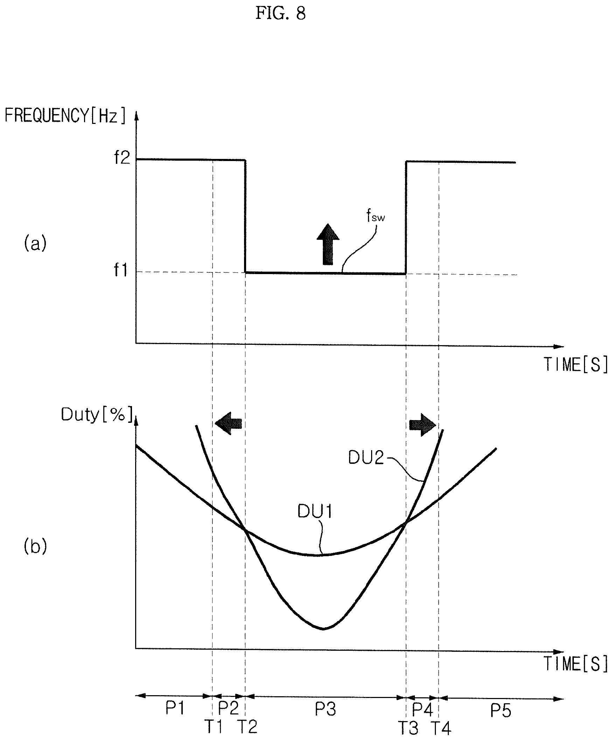

FIG. 8 shows change in switching frequency or change in first and second periods in the discontinuous conduction mode, according to load.

In (a) of FIG. 8, the switching element operates in the discontinuous conduction mode during a first period P1 and a second period P5 at both ends of the half-period of the input AC voltage Vₛ, operates in the continuous conduction mode during a third period P3 between the first period P1 and the second period P5, and operates in the continuous conduction mode during a fourth period P2 between the first period P1 and the third period P3 and a fifth period P4 between the third period P3 and the second period P5.

In (a) of FIG. 8, the switching element operates in the continuous conduction mode during the third period P3 between the first period P1 and the second period P5 at both ends of the input AC voltage Vₛ and the switching frequency of the third period P3 increases.

As the load of the output terminal of the converter 210 increases, the frequency of the switching element in the period of the continuous conduction mode increases, thereby decreasing switching element loss and diode loss under low load or rated load. Accordingly, it is possible to increase converter efficiency.

In (b) of FIG. 8, as load increases, the widths of the first period P1 and the second period P5 of the discontinuous conduction mode decrease.

Further, the widths of the fourth period P2 and the fifth period P4 of the continuous conduction mode may decrease.

That is, as a load increases, the width of the third period P3 of the continuous conduction mode may relatively increase.

By such period change, as the load increases, the width of the period of the discontinuous conduction mode having more conduction loss decreases, thereby improving operation efficiency of the converter.

As load decreases, the widths of the first period P1 and the second period P5 of the discontinuous conduction mode may increase.

By such period change, as the load decreases, the period of the discontinuous conduction mode having less switching loss increases, thereby improving operation efficiency of the converter.

The converter 210 may include a buck converter, a boost converter, a buck-boost converter, an interleaved buck converter, an interleaved boost converter or an interleaved buck-boost converter. The above-described switching frequency change is applicable without change.

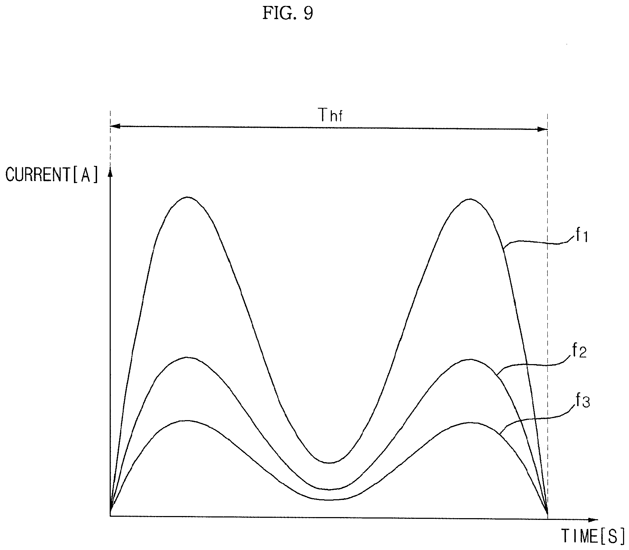

FIG. 9 shows the level of current ripple according to switching frequency within a half-period of an input voltage.

Referring to the figure, Thf indicates the half-period of the voltage of the power source 201 and f1, f2 and f3 respectively indicate currents flowing in the inductor L1 of the converter 210 according to switching frequencies of 30 kHz, 60 kHz and 120 kHz.

It can be seen from the figure that current ripple is significantly generated when the switching element of the converter 210 is driven with the switching frequency of 30 kHz, but current ripple significantly decreases when the switching element S1 is driven at the switching frequencies of 60 kHz and 120 kHz.

In FIG. 9, current ripple is rarely changed in the middle region but current ripple is significantly changed in the regions located at both sides of the middle region, by switching frequency change.

In the present invention, for current ripple reduction, the converter controller 215 may divide the half-period of the voltage of the power source 201 into a plurality of periods and control the switching element S1 of the converter 210 to differently operate in the first and second periods having a first switching frequency and a third period having a second switching frequency lower than the first switching frequency between the first and second periods.

Alternatively, the converter controller 215 may further divide the half-period of the voltage of the power source 201 into a fourth period between the first period and the third period and a fifth period between the third period and the second period and control the switching element of the converter to operate at the second switching frequency in the fourth period and the fifth period.

FIGS. 10A to 11B show change in switching frequency or change in period width, according to load.

First, FIG. 10A shows the case in which the half-period of the voltage of the power source 201 is divided into a plurality of periods, that is, first and second periods Pa1 and Pa5 having a first switching frequency fsa1 and third periods Pa2, Pa3 and Pa4 having a second switching frequency fsa2 lower than the first switching frequency fsa1 between the first and second periods Pa1 and Pa4.

As shown in FIG. 10A, the converter controller 215 may divide the half-period of the voltage of the power source 201 into a plurality of periods and control the switching element to operate in the first and second periods Pa1 and Pa5 having the first switching frequency fsa1 and third periods Pa2, Pa3 and Pa4 having the second switching frequency fsa2 lower than the first switching frequency fsa1 between the first and second periods Pa1 and Pa5.

That is, as shown in (b) of FIG. 10A, the converter controller 215 may control the switching element S1 of the converter 210 to be switched at the first switching frequency fsa1 in the first and second periods Pa1 and Pa5 and to be switched at the second switching frequency fsa2 in the third periods Pa2, Pa3 and Pa4.

Next, the converter controller 215 may change the second switching frequency of the third periods according to the load 205 of the output terminal of the converter. In particular, the converter controller 215 may control increase in the second switching frequency fsb2 as the load 205 of the output terminal of the converter increases, as shown in FIG. 10B.

That is, the converter controller 215 may control the switching element S1 of the converter 210 to be switched at the first switching frequency fsb1 in the first and second periods Pb1 and Pb5 and to be switched at the second switching frequency fsb2 in the third periods Pb2, Pb3 and Pb4, between a waveform i_{Lix} and a waveform i_{Lib}.

Referring to FIG. 10B, it can be seen that the second switching frequency fsb2 of FIG. 10B is higher than the second switching frequency fsa2 of FIG. 10A.

Since the switching frequency of the third period having relatively high current ripple increases according to the load 205 of the output terminal of the converter, it is possible to improve switching efficiency.

As the load 205 of the output terminal of the converter increases, as shown in FIG. 10B, the converter controller 215 may control the decrease in the widths of the first period P1b and the second period Pb5.

It can be seen that the widths of the first period Pb1 and the fifth period Pb5 of FIG. 10B are less than those of the first period Pa1 and the second period Pa5 of FIG. 10A.

The converter controller 215 may control increase in the widths of the third periods Pb2, Pb3 and Pb4 as the load 205 of the output terminal of the converter increases, as shown in FIG. 10B.

It can be seen that the widths of the third period Pb2, Pb3 and Pb4 of FIG. 10B are greater than those of the third periods Pa2, Pa3 and Pa4 of FIG. 10A.

The converter controller 215 may further divide the half-period of the voltage of the power source 201 into a fourth period Pc2 between a first period Pc1 and a third period Pc3 and a fifth period Pc4 between the third period Pc3 and a second period Pc5 as shown in FIG. 10C and control the switching element S1 of the converter 210 at a third switching frequency fsc3 higher than the second switching frequency fsc2 and lower than the first switching frequency fsc1 in the fifth period Pc2 and the fifth period Pc4.

Referring to FIG. 10C, it can be seen that the third switching frequency fsc3 of FIG. 10C is higher than the second switching frequency fsc2.

Since the switching frequency in the fourth period Pc2 and the fifth period Pc4 having relatively high current ripple increases, it is possible to improve switching efficiency.

Referring to FIG. 10C, it can be seen that the second switching frequency fsc2 of FIG. 10C is higher than the second switching frequency fsb2 of FIG. 10B.

The converter controller 215 may control decrease in the widths of the first period Pc1 and the second period Pc5 as the load 205 of the output terminal of the converter increases.

It can be seen that the widths of the first period Pc1 and the second period Pc5 of FIG. 10C are less than those of the first period Pb1 and the second period Pb5 of the FIG. 10B.

The converter controller 215 may further divide the half-period of the voltage of the power source 201 into the fourth period Pc2 between the first period Pc1 and the third period Pc3 and the fifth period Pc4 between the third period Pc3 and the second period Pc5 and control increase in the widths of the fourth period Pc2 and the fifth period Pc4 as the load 205 of the output terminal of the converter increases, as shown in FIG. 10C.

The converter controller 215 may further divide the half-period of the voltage of the power source 201 into the fourth period Pc2 between the first period Pc1 and the third period Pc3 and the fifth period Pc4 between the third period Pc3 and the second period Pc5 and control increase in the switching frequency of the third to fifth periods Pc2, Pc3 and Pc4 as the load 205 of the output terminal of the converter increases, as shown in FIG. 10C.

That is, as compared to FIG. 10B, the switching frequency of the third to fifth periods Pc2, Pc3 and Pc4 of FIG. 10C may increase, such that switching efficiency can be improved in spite of load increase.

The converter controller 215 may control the switching frequency of the third period Pc3 of the third to fifth periods Pc2, Pc3 and Pc4 to be higher than that of the fourth and fifth periods as the load 205 of the output terminal of the converter increases.

The switching frequency of the third period Pc3 having relatively low current ripple may increase, thereby improving switching efficiency.

The converter controller 215 may change the second switching frequency or the widths of the first period and the second period according to the level of current flowing in the inductors L1 and L2 of the converter 210.

More specifically, the converter controller 215 may control decrease in the switching frequency as the level of current flowing in the inductor L1 of the converter 210 increases. In particular, the second switching frequency may be lower than the first switching frequency.

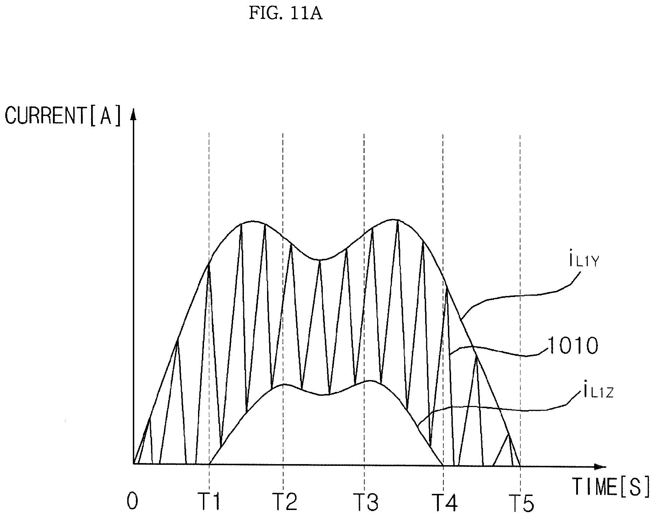

FIG. 11A shows the case in which the switching element operates in the discontinuous conduction mode during a first period T1 and a second period T5 at both ends of the half-period of the input AC voltage Vₛ and operates the continuous conduction mode during a third period T3, a fourth period T2 and a fifth period T4 between the first period T1 and the second period T5.

Unlike the figure, the switching element may operate in the continuous conduction mode in the fourth period P2 between the first period P1 and the third period P3 and the fifth period P5 between the third period P3 and the second period P2.

In FIG. 11A, the switching element S1 of the converter 210 may be controlled to be switched between a waveform i_{Liy} and a waveform i_{Liz}.

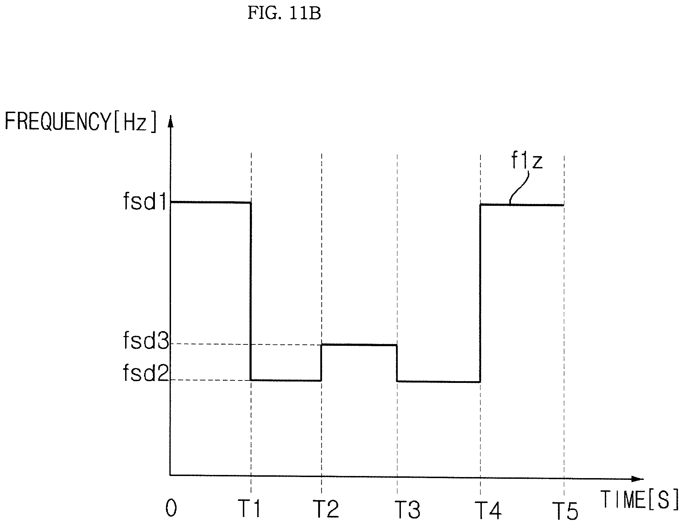

FIG. 11B shows the case in which the switching element S1 of the converter 210 is controlled to operate at a first switching frequency fsd1 in the first period T1 and the second period T5 of the half-period of the voltage of the power source 201, to operate at a second switching frequency fsd2 lower than the first switching frequency fsd1 in the third period T3 between the first period T1 and the second period T5 and to operate at a third switching frequency fsc3 higher than the second switching frequency fsc2 and lower than the first switching frequency fsc1 in the fourth period T2 between the first period T1 and the third period T3 and the fifth period T4 between the third period T3 and the second period T5.

The converter controller 415 may change the switching frequency in the first period T1 and the second period T5 to select a maximum frequency, which is a tradeoff between conduction loss and switching loss, as an optimal frequency.

The converter controller 415 may select a minimum frequency satisfying an input current harmonic criterion because current ripple flowing in the inductor L1 is highest in the fourth period T2 and the fifth period T4.

The converter controller 415 may select a low frequency because the current ripple flowing in the inductor L1 is high and the increment of ripple according to frequency decrease is lowest as shown in FIG. 9, in the third period T3. However, a frequency higher than that of those of the fourth period T2 and the fifth period T4 may be selected.

The converter 210 may include a buck converter, a boost converter, a buck-boost converter, an interleaved buck converter, an interleaved boost converter or an interleaved buck-boost converter. The above-described switching frequency change is applicable without change.

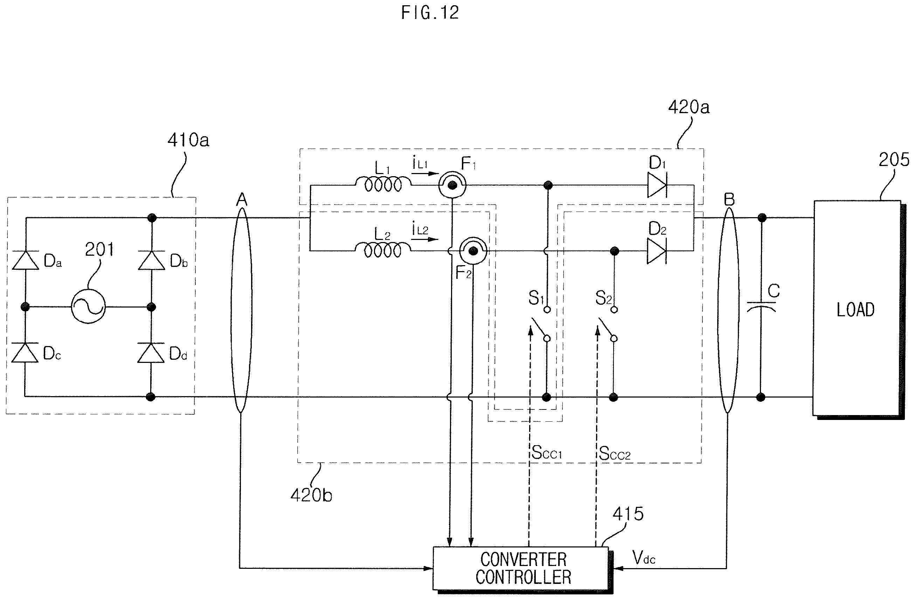

FIG. 12 is a circuit diagram showing another example of the power conversion apparatus of FIG. 3.

Referring to the figure, the power conversion apparatus of FIG. 12 may include interleaved converters 420a and 420b and, more particularly, interleaved boost converters 420a and 420b.

That is, the converter 210 includes a rectifier 410a and the interleaved boost converters 420a and 420b.

The rectifier 410a receives and rectifies a single-phase AC voltage of the power source 201 and outputs the rectified voltage.

To this end, the rectifier 410a may include two pairs of upper and lower arm diodes connected to each other in parallel (Da&Dc, Db&Dd), each pair including an upper arm diode Da or Db and a lower arm diode Dc or Dd connected in series. That is, the upper and lower arm diodes may be connected to each other in the form of a bridge.

The first boost converter 420a and the second boost converter 420b are connected to each other in parallel and are disposed between the rectifier 410a and the capacitor C.

The first boost converter 420a may include a first diode D1 having one end connected to the capacitor C, a first inductor L1 connected between the first diode D1 and the rectifier 410, and a first boost switching element S1 connected to the first inductor L1 and the first diode D1 in parallel.

The second boost converter 420b may include a second diode D2 having one end connected to the capacitor C, a second inductor L2 connected between the second diode D2 and the rectifier 410, and a second boost switching element S2 connected to the second inductor L2 and the second diode D2 in parallel.

A first current detector F1 may detect current i_{L1} flowing in the first inductor L1 of the first boost converter 420a and a second current detector F2 may detect current i_{L2} flowing in the second inductor L2 of the second boost converter 420b. To this end, a current transformer (CT), a shunt resistor, etc. may be used as the first and second current detectors F1 and F2. The detected inductor currents i_{L1} and i_{L2} may be input to the converter controller 415 in the form of pulse type discrete signals.

The converter controller 415 may generate and output a first converter switching control signal S_{cc1} for controlling the first boost converter 420a based on the detected current i_{L1}, the dc link voltage V_{dc} and the input voltage Vₛ and generate and output a second converter switching control signal S_{cc2} for controlling the second boost converter 420b based on the detected current i_{L2}, the dc link voltage V_{dc} and the input voltage Vₛ.

FIG. 13 is a block diagram showing the internal configuration of an example of the inverter controller of FIG. 3.

Referring to FIG. 13, the inverter controller 230 may include an axis transformation unit 310, a speed calculator 320, a current command generator 330, a voltage command generator 340, an axis transformation unit 350 and a switching control signal output unit 360.

The axis transformation unit 310 receives and transforms three-phase currents iₐ, i_{b}, i_{c} detected by the output current detector E into two-phase currents i_{α} and i_{β} of a stationary coordinate system.

The axis transformation unit 310 may transform two-phase currents i_{α} and i_{β} of the stationary coordinate system into two-phase currents i_{d} and i_{q} of a rotating coordinate system.

The speed calculator 320 may output a calculated position *θ̂ᵣ* and a calculated speed ω̂*ᵣ* based on the two-phase currents i_{α} and i_{β} of the stationary coordinate system transformed by the axis transformation unit 310.

The current command generator 330 generates a current command value i^{*}_{q} based on the calculated speed ω̂*ᵣ* and a speed command value ω^{*}ᵣ. For example, the current command generator 330 may perform PI control in a PI controller 335 based on a difference between the calculated speed ω̂*ᵣ* and the speed command value ω^{*}ᵣ and generate the current command value i^{*}_{q}. Although a q-axis current command value i^{*}_{q} is shown as the current command value in the figure, a d-axis current command value i^{*}_{d} may also be generated unlike the figure. The value of the d-axis current command value i^{*}_{d} may be set to 0.

The current command generator 330 may further include a limiter (not shown) for limiting the level of the current command value i^{*}_{q} not to exceed an allowable range.

Next, the voltage command generator 340 generates d-axis and q-axis voltage command values v^{*}_{d} and v^{*}_{q} based on the d-axis and q-axis currents i_{d} and i_{q} transformed into the two-phase rotating coordinate system by the axis transformation unit and the current command values i^{*}_{d} and i^{*}_{q} from the current command generator 330. For example, the voltage command generator 340 may perform PI control in the PI controller 344 based on a difference between the q-axis current i_{q} and the q-axis current command i^{*}_{q} and generate a q-axis voltage command value v^{*}_{q}. In addition, the voltage command generator 340 may perform PI control in the PI controller 348 based on a difference between the d-axis current i_{d} and the d-axis current command i^{*}_{d} and generate a d-axis voltage command value v^{*}_{d}. The voltage command generator 340 may further include a limiter (not shown) for limiting the level of the d-axis and q-axis voltage command values v^{*}_{d} and v^{*}_{q} not to exceed an allowable range.

The generated d-axis and q-axis voltage command values v^{*}_{d} and v^{*}_{q} are input to the axis transformation unit 350.

The axis transformation unit 350 receives the position *θ̂ᵣ* calculated by the speed calculator 320 and the d-axis and q-axis voltage command values v^{*}_{d} and v^{*}_{q} and performs axis transformation.

First, the axis transformation unit 350 transforms a two-phase rotating coordinate system into a two-phase stationary coordinate system. At this time, the position *θ̂ᵣ* calculated by the speed calculator 320 may be used.

The axis transformation unit 350 transforms a two-phase stationary coordinate system into a three-phase stationary coordinate system. Through such transformation, the axis transformation unit 1050 outputs three-phase output voltage command values v^{*}ₐ, v^{*}_{b} and v^{*}_{c}.

The switching control signal output unit 360 generates and outputs an inverter switching control signal S_{ic} according to a pulse width modulation (PWM) method based on the three-phase output voltage command values v^{*}ₐ, v^{*}_{b} and v^{*}_{c}.

The output inverter switching control signal S_{ic} may be converted into a gate drive signal by a gate drive unit (820a or 820b of FIG. 9a or 9b) and input to the gate of each switching element of the inverter 420. Accordingly, switching operation of the switching elements Sa, S'a, Sb, S'b, Sc and S'c of the inverter 420 may be performed.

According to an embodiment of the present invention, the power conversion apparatus and the air conditioner including the same include a converter including a switching element and configured to convert an input alternating current (AC) voltage into a direct current (DC) voltage and to output the DC voltage, and a controller configured to control the converter. The controller divides a half-period of the input AC voltage into a plurality of periods according to a level or phase of the input AC voltage and changes a switching frequency of the switching element in at least some of the plurality of periods, thereby reducing switching loss and conduction loss of the switching element of the converter. As a result, it is possible to increase converter efficiency.

In particular, the converter controller operates the switching element in the discontinuous conduction mode during the first and second periods at both ends of the half-period of the input AC voltage Vₛ and operates the switching element in the continuous conduction mode during the third period between the first and the second period of the half-period of the input AC voltage Vₛ, and sets the switching frequency of the switching element in the first and second periods at both ends of the half-period of the input AC voltage Vₛ to be higher than that of the switching element in the third period between the first and second periods of the half-period of the input AC voltage Vₛ, thereby reducing current ripple in a frequency changing period due to switching frequency increase and reducing conduction loss of the switching element and core loss of the reactor or the inductor. Accordingly, it is possible to increase converter efficiency.

In particular, during the first and second periods at both ends of the half-period of the input AC voltage Vₛ, in the discontinuous conduction mode, turn-off loss of the diode and turn-on loss of the switching element are further decreased as compared to the continuous conduction mode, thereby increasing converter efficiency.

As the load of the output terminal of the converter increases, the converter controller may control decrease in the first and second periods of the continuous conduction mode or increase in the frequency of the switching element in the third period, thereby decreasing switching element loss and diode loss under low load or rated load. Accordingly, it is possible to increase converter efficiency.

The converter controller may divide the half-period of the input voltage into a plurality of periods and control the switching element of the converter to be differently driven in the first and second periods having a first switching period and a third period having a second switching frequency lower than the first switching frequency between the first and second periods, thereby reducing switching loss and conduction loss of the switching element of the converter. As a result, it is possible to increase converter efficiency.

As the load of the output terminal of the converter increases, the converter controller may control increase in the second switching frequency or decrease in the widths of the first period and the second period or control increase in the width of the third period so as to decrease the amount of current ripple flowing in the converter, thereby reducing switching and conduction loss of the switching element of the converter. As a result, it is possible to increase converter efficiency.

The power conversion apparatus and the air conditioner including the same according to the present invention should not be limited to configurations and methods of the above-described embodiments, and all or some of the embodiments may be selectively combined with one another to achieve various alterations as long within the scope of the invention as defined in the claims.

Although not presently claimed, the power conversion apparatus or the air conditioner including the same according to the present invention may be implemented as code that can be written to a processor-readable recording medium and can thus be read by a processor. The processor-readable recording medium may be any type of recording device in which data can be stored in a processor-readable manner. Examples of the computer-readable recording medium include a ROM, a RAM, a CD-ROM, a magnetic tape, a floppy disk, optical data storage, and a carrier wave (e.g., data transmission over the Internet). The computer-readable recording medium may be distributed over a plurality of computer systems connected to a network so that computer-readable code is written thereto and executed therefrom in a decentralized manner. Functional programs, code, and code segments to realize the embodiments herein can be construed by one of ordinary skill in the art.

Although the preferred embodiments of the present invention have been disclosed for illustrative purposes, those skilled in the art will appreciate that various modifications, additions and substitutions are possible, without departing from the scope of the invention as defined in the accompanying claims.

## Claims

1. A power conversion apparatus (200) comprising:
a converter (210) including a switching element (S1) and configured to convert an input alternating current, AC, voltage (Vₛ) into a direct current, DC, voltage and to output the DC voltage; and
a controller (215) configured to control the converter (210),
wherein the controller (215) is configured to divide a half-period of the input AC voltage (Vₛ) into a plurality of periods according to a level or phase of the input AC voltage (Vₛ) and is configured to change a switching frequency of the switching element (S1) in at least some of the plurality of periods,
wherein the controller (215) is configured to divide the half-period of the input AC voltage (Vₛ) into first and second periods at the both ends of the half-period of the input AC voltage (Vₛ) and a third period between the first and second periods,
wherein the controller (215) is configured to control the switching element of the converter to be differently driven in first and second periods having a first switching frequency and a third period having a second switching frequency lower than the first switching frequency between the first and second periods,
wherein the controller (215) is configured to control increase in the second switching frequency, to control decrease in widths of the first period and the second period or to control increase in a width of the third period as a load (205) of an output terminal of the converter (210) increases.

2. The power conversion apparatus (200) according to claim 1, wherein the controller (215) is further configured to divide the half-period of the input voltage (Vₛ) into a fourth period between the first period and the third period and a fifth period between the third period and the second period and is configured to control the switching element (S1) of the converter to operate at the second switching frequency in the fourth period and the fifth period.

3. The power conversion apparatus (200) according to claim 1 or 2, wherein the controller (215) further divides the half-period of the input voltage (Vₛ) into a fourth period between the first period and the third period and a fifth period between the third period and the second period and is configured to control the switching element (S1) of the converter (210) to operate at a third switching frequency higher than the second switching frequency and lower than the first switching frequency in the fourth period and the fifth period.

4. The power conversion apparatus (200) according to claim 1 or 2, wherein:
the controller (215) is further configured to divide the half-period of the input voltage into a fourth period between the first period and the third period and a fifth period between the third period and the second period, and is configured to control decrease in widths of the first period and the second period or controls increase in widths of the fourth period and the fifth period, as the load (205) of the output terminal of the converter (210) increases.

5. The power conversion apparatus (200) according to claim 1 or 2, wherein:
the controller (215) is further configured to divide the half-period of the input voltage into a fourth period between the first period and the third period and a fifth period between the third period and the second period, and is configured to control increase in the switching frequency in the third to fifth periods as the load (205) of the output terminal of the converter (210) increases.

6. The power conversion apparatus (200) according to any of claims 1 to 5, wherein:
the converter (210) includes an inductor (L1), a diode (D1) and a switching element (S1) connected between the inductor (L1) and the diode (D1), and
the controller (215) is configured to change the second switching frequency or widths of first and second periods according to a level of current flowing in the inductor (L1).

7. The power conversion apparatus (200) according to any of claims 1 to 6, wherein the controller (215) includes:
a current command generator (720) configured to generate a current command value based on the dc voltage;
a voltage command generator (730) configured to generate a voltage command value based on the current command value and input current corresponding to the input AC voltage (Vₛ);
a switching frequency changing unit (770) configured to set the switching frequency of the switching element based on a phase of the input AC voltage (Vₛ); and
a switching control signal output unit (760) configured to output a switching control signal of the converter based on the voltage command value and the set switching frequency.

8. The power conversion apparatus (200) according to claim 7, wherein:
the controller (215) further includes a feed-forward compensator (740) configured to compensate for disturbance of the input AC voltage (Vₛ),
the switching control signal output unit (760) is configured to output the switching control signal of the converter (210) based on a compensation voltage command value from the feed-forward compensator (740), the voltage command value and the set switching frequency.

9. An air conditioner (100) comprising the power conversion apparatus (200) according to any one of claims 1 to 8.

## Patentansprüche

1. Leistungsumwandlungsvorrichtung (200), die aufweist:
einen Wandler (210), der ein Schaltelement (S1) aufweist und konfiguriert ist, eine Eingangswechselstrom, AC, Spannung (Vₛ) in eine Gleichstrom, DC, Spannung umzuwandeln und die DC-Spannung abzugeben; und
eine Steuereinheit (215) konfiguriert ist, den Wandler (210) zu steuern,
wobei die Steuereinheit (215) konfiguriert ist, eine Halbperiode der Eingangs-AC-Spannung (Vₛ) gemäß einem Pegel oder Phase der Eingangs-AC-Spannung (Vₛ) in mehrere Perioden zu teilen, und konfiguriert ist, eine Schaltfrequenz des Schaltelements (S1) in mindestens einigen der mehreren Perioden zu ändern, wobei die Steuereinheit (215) konfiguriert ist, die Halbperiode der Eingangs-AC-Spannung (Vₛ) in erste und zweite Perioden an den beiden Enden der Halbperiode der Eingangs-AC-Spannung (Vₛ) und eine dritte Periode zwischen der ersten und zweiten Periode zu teilen,
wobei die Steuereinheit (215) konfiguriert ist, das Schaltelement des Wandlers so zu steuern, dass es in ersten und zweiten Perioden mit einer ersten Schaltfrequenz und in einer dritten Periode mit einer zweiten Schaltfrequenz, die niedriger ist als die erste Schaltfrequenz zwischen der ersten und zweiten Periode, unterschiedlich betrieben wird,
wobei die Steuereinheit (215) konfiguriert ist, eine Zunahme der zweiten Schaltfrequenz zu steuern, eine Abnahme der Breite der ersten Periode und der zweite Periode zu steuern oder eine Zunahme der Breite der dritten Periode zu steuern, wenn eine Last (205) eines Ausgangsanschlusses des Wandlers (210) zunimmt.

2. Leistungsumwandlungsvorrichtung (200) nach Anspruch 1, wobei die Steuereinheit (215) ferner konfiguriert ist, die Halbperiode der Eingangsspannung (Vₛ) in eine vierte Periode zwischen der ersten Periode und der dritten Periode und eine fünfte Periode zwischen der dritten Periode und der zweiten Periode zu teilen und konfiguriert ist, das Schaltelement (S1) des Wandlers zu steuern, in der vierten Periode und der fünften Periode mit der zweiten Schaltfrequenz zu arbeiten.

3. Leistungsumwandlungsvorrichtung (200) nach Anspruch 1 oder 2, wobei die Steuereinheit (215) ferner die Halbperiode der Eingangsspannung (Vₛ) in eine vierte Periode zwischen der ersten Periode und der dritten Periode und eine fünfte Periode zwischen der dritten Periode und der zweiten Periode teilt und konfiguriert ist, das Schaltelement (S1) des Wandlers (210) zu steuern, in der vierten Periode und der fünften Periode mit einer dritten Schaltfrequenz zu arbeiten, die höher als die zweite Schaltfrequenz und niedriger als die erste Schaltfrequenz ist.

4. Leistungsumwandlungsvorrichtung (200) nach Anspruch 1 oder 2, wobei:
die Steuereinheit (215) ferner konfiguriert ist, die Halbperiode der Eingangsspannung in eine vierte Periode zwischen der ersten Periode und der dritten Periode und eine fünfte Periode zwischen der dritten Periode und der zweiten Periode zu teilen, und konfiguriert ist, eine Abnahme der Breite der ersten Periode und der zweiten Periode zu steuern oder eine Zunahme der Breite der vierten Periode und der fünften Periode zu steuern, wenn die Last (205) des Ausgangsanschlusses des Wandlers (210) zunimmt.

5. Leistungsumwandlungsvorrichtung (200) nach Anspruch 1 oder 2, wobei:
die Steuereinheit (215) ferner konfiguriert ist, die Halbperiode der Eingangsspannung in eine vierte Periode zwischen der ersten Periode und der dritten Periode und eine fünfte Periode zwischen der dritten Periode und der zweiten Periode zu teilen, und konfiguriert ist, eine Zunahme der Schaltfrequenz in der dritten bis fünfte Periode zu steuern, wenn die Last (205) des Ausgangsanschlusses des Wandlers (210) zunimmt.

6. Leistungsumwandlungsvorrichtung (200) nach einem der Ansprüche 1 bis 5, wobei:
der Wandler (210) eine Induktivität (L1), eine Diode (Dl) und ein Schaltelement (S1) aufweist, das zwischen die Induktivität (L1) und die Diode (Dl) geschaltet ist, und
die Steuereinheit (215) konfiguriert ist, die zweite Schaltfrequenz oder die Breite der ersten und zweiten Periode gemäß einem Pegel des Stroms zu ändern, der in der Induktivität (L1) fließt.

7. Leistungsumwandlungsvorrichtung (200) nach einem der Ansprüche 1 bis 6, wobei die Steuereinheit (215) aufweist:
einen Strombefehlsgenerator (720, der konfiguriert ist, beruhend auf der DC-Spannung einen Strombefehlswert zu erzeugen;
einen Spannungsbefehlsgenerator (730), der konfiguriert ist, beruhend auf dem Strombefehlswert und einem der Eingangs-AC-Spannung (Vₛ) entsprechenden Eingangsstrom einen Spannungsbefehlswert zu erzeugen;
eine Schaltfrequenzänderungseinheit (770), die konfiguriert ist, die Schaltfrequenz des Schaltelements beruhend auf einer Phase der Eingangs-AC-Spannung (Vₛ) einzustellen; und
eine Schaltsteuersignal-Ausgabeeinheit (760), die konfiguriert ist, beruhend auf dem Spannungsbefehlswert und der eingestellten Schaltfrequenz ein Schaltsteuersignal des Wandlers auszugeben.

8. Leistungsumwandlungsvorrichtung (200) nach Anspruch 7, wobei:
die Steuereinheit (215) ferner einen Vorwärtsregelungs-Kompensator (740) aufweist, der konfiguriert ist, eine Störung der Eingangs-AC-Spannung (Vₛ) zu kompensieren,
die Schaltsteuersignal-Ausgabeeinheit (760) konfiguriert ist, das Schaltsteuersignal des Wandlers (210) beruhend auf einem Kompensationsspannungsbefehlswert aus dem Vorwärtsregelungs-Kompensator (740), dem Spannungsbefehlswert und der eingestellten Schaltfrequenz auszugeben.

9. Klimaanlage (100), die die Leistungsumwandlungsvorrichtung (200) nach einem der Ansprüche 1 bis 8 aufweist.

## Revendications

1. Appareil de conversion de puissance (200), comprenant :
un convertisseur (210) comprenant un élément de commutation (S1) et prévu pour convertir une tension alternative, AC, d'entrée (V_{S}) en une tension continue, DC, et pour sortir la tension continue ; et
un contrôleur (215) prévu pour commander le convertisseur (210),
où le contrôleur (215) est prévu pour diviser une demi-période de la tension alternative d'entrée (V_{S}) en une pluralité de périodes en fonction d'un niveau ou d'une phase de la tension alternative d'entrée (V_{S}), et est prévu pour changer une fréquence de commutation de l'élément de commutation (S1) en au moins quelques-unes de la pluralité de périodes, où le contrôleur (215) est prévu pour diviser la demi-période de la tension alternative d'entrée (V_{S}) en une première et une deuxième périodes aux deux extrémités de la demi-période de la tension alternative d'entrée (V_{S}) et une troisième période entre la première et la deuxième périodes,
où le contrôleur (215) est prévu pour commander l'élément de commutation du convertisseur pour être excité différemment dans la première et la deuxième périodes ayant une première fréquence de commutation, et une troisième période ayant une deuxième fréquence de commutation inférieure à la première fréquence de commutation entre la première et la deuxième périodes,
où le contrôleur (215) est prévu pour commander une élévation dans la deuxième fréquence de commutation, pour commander une réduction en largeur de la première période et de la deuxième période ou pour commander une croissance en largeur de la troisième période quand la charge (205) d'une borne de sortie du convertisseur (210) augmente.

2. Appareil de conversion de puissance (200) selon la revendication 1, où le contrôleur (215) est en outre prévu pour diviser la demi-période de la tension d'entrée (V_{S}) en une quatrième période entre la première période et la troisième période et une cinquième période entre la troisième période et la deuxième période, et est prévu pour commander le fonctionnement de l'élément de commutation (S1) du convertisseur à la deuxième fréquence de commutation dans la quatrième période et la cinquième période.

3. Appareil de conversion de puissance (200) selon la revendication 1 ou la revendication 2, où le contrôleur (215) divise en outre la demi-période de la tension d'entrée (V_{S}) en une quatrième période entre la première période et la troisième période et une cinquième période entre la troisième période et la deuxième période, et est prévu pour commander le fonctionnement de l'élément de commutation (S1) du convertisseur (210) à une troisième fréquence de commutation supérieure à la deuxième fréquence de commutation et inférieure à la première fréquence de commutation dans la quatrième période et la cinquième période.

4. Appareil de conversion de puissance (200) selon la revendication 1 ou la revendication 2, où :
le contrôleur (215) est en outre prévu pour diviser la demi-période de la tension d'entrée en une quatrième période entre la première période et la troisième période et une cinquième période entre la troisième période et la deuxième période, et est prévu pour commander une réduction en largeur de la première période et de la deuxième période ou commander une croissance en largeur de la quatrième période et de la cinquième période quand la charge (205) de la borne de sortie du convertisseur (210) augmente.

5. Appareil de conversion de puissance (200) selon la revendication 1 ou la revendication 2, où :
le contrôleur (215) est en outre prévu pour diviser la demi-période de la tension d'entrée en une quatrième période entre la première période et la troisième période et une cinquième période entre la troisième période et la deuxième période, et est prévu pour commander une élévation dans la fréquence de commutation dans la troisième à la cinquième périodes quand la charge (205) de la borne de sortie du convertisseur (210) augmente.

6. Appareil de conversion de puissance (200) selon l'une des revendications 1 à 5, où :
le convertisseur (210) comprend un inducteur (L1), une diode (D1) et un élément de commutation (S1) connecté entre l'inducteur (L1) et la diode (D1), et
le contrôleur (215) est prévu pour changer la deuxième fréquence de commutation ou la largeur de la première et de la deuxième périodes en fonction d'un niveau de courant circulant dans l'inducteur (L1).

7. Appareil de conversion de puissance (200) selon l'une des revendications 1 à 6, où le contrôleur (215) comprend :
un générateur de commande de courant (720) prévu pour générer une valeur de commande de courant sur la base de la tension continue ;
un générateur de commande de tension (730) prévu pour générer une valeur de commande de tension sur la base de la valeur de commande de courant et du courant d'entrée correspondant à la tension alternative d'entrée (V_{S}) ;
une unité de changement de fréquence de commutation (770) prévue pour régler la fréquence de commutation de l'élément de commutation sur la base d'une phase de la tension alternative d'entrée (V_{S}) ; et
une unité de sortie de signal de commande de commutation (760) prévue pour sortir un signal de commande de commutation du convertisseur sur la base de la valeur de commande de tension et de la fréquence de commutation réglée.

8. Appareil de conversion de puissance (200) selon la revendication 7, où :
le contrôleur (215) comprend en outre un compensateur par anticipation (740) prévu pour compenser les perturbations de la tension alternative d'entrée (V_{S}),
l'unité de sortie de signal de commande de commutation (760) est prévue pour sortir le signal de commande de commutation du convertisseur (210) sur la base d'une valeur de commande de tension de compensation du compensateur par anticipation (740), de la valeur de commande de tension et de la fréquence de commutation réglée.

9. Climatiseur (100), comprenant l'appareil de conversion de puissance (200) selon l'une des revendications 1 à 8.
